Europäisches Patentamt

European Patent Office

Office européen des brevets

(11) Publication number: **0 337 251**
**A1**

# EUROPEAN PATENT APPLICATION

(21) Application number: **89105892.7**

(22) Date of filing: **04.04.89**

(51) Int. Cl.⁴: **B60J 3/00**

(30) Priority: **08.04.88 ES 8801062**

(43) Date of publication of application:
**18.10.89 Bulletin 89/42**

(84) Designated Contracting States:
**BE DE FR GB IT SE**

(71) Applicant: **INDUSTRIAS TECHNO-MATIC, S.A.**
**Calle Espronceda 324**
**E-08027 Barcelona(ES)**

(72) Inventor: **Gabas, Carlos C.**
**Calle Rocafort, 180**
**E-08029 Barcelona(ES)**

(74) Representative: **Dipl.-Ing. Schwabe, Dr. Dr.**
**Sandmair, Dr. Marx**
**Stuntzstrasse 16**
**D-8000 München 80(DE)**

(54) Vanity mirror for automobiles.

(57) The invention relates to a vanity mirror for automobiles, comprising a body (1) in the form of a flat box provided, on opposite sides thereof, with two pivot means (10a,10b), furthermore a lightweight mounting member (3) inserted in said body (1), a covering frame (15) attached to said mounting member (3), a mirror (17) mounted in said frame (15), and a retaining mechanism; said body (1) is movably mounted in a receptacle (R) formed in a sun visor of said automobile, said receptacle (R) is provided with two parallel tracks (12a,12b) disposed on mutually opposite sides, along which said pivot means (10a,10b) of the body (1) is movable.

Fig.1

EP 0 337 251 A1

## Vanity Mirror for Automobiles

This invention relates to a vanity mirror for automobiles to be mounted in a sun visor, particularly the sun visor located at the front passenger side.

In this respect, the term "mirror" herein defines the integral unit formed by the mirror itself and the associated assembly and coupling members. Such a vanity mirror affords, with reference to other known embodiments, essential differences in structure and operation.

It is a common practice, with the exception of some luxury or high priced models, for the vanity mirror fitted to the sun visors in the majority of automobiles to be simple and to be attached thereto by direct gluing, so that the mirror surface is orientated towards the interior of the vehicle. In other cases, the mirror is attached, for example, by a press fit in a correspondingly shaped window in the sheet-like member surrounding the sun visor. In both cases, the mounted assembly has only a very limited capacity to withstand in the course of time the degradation of the materials due to wear, especially the effects of repeated heat cycles, to which the components are subjected.

There exist also mirrors provided with covers as well as mirrors housed within the body of the sun visor in an assembly similar to that of a sliding drawer. These embodiments provide the mirror with better protection, both with reference to the wear resistance of the mirror itself and to the passive safety of the occupant of the nearby seat or in general of the passengers in the vehicle.

It is also known that during the night and, in general, under bad light conditions, it is difficult to use a normal vanity mirror attached to the front-seat passanger sun visor in automobiles, even if the automobile is provided with one or more lights on the passenger side. This is due to the fact that said lights are generally located so as to produce a desired distributed illumination, i.e. they are either behind the person using the mirror or are located to one side, causing the illumination of the face to be incomplete or insufficient.

The automobile vanity mirror according to the present invention overcomes the above described drawbacks in an effective and original way by a novel operative system. According to the invention, such a vanity mirror is characterized essentially in that it is provided with a body in the form of a flat box provided, on opposite sides thereof, with two pivot means, a lightweight mounting member inserted in said body, a covering frame attached to said mounting member, a mirror mounted in said frame and a retaining mechanism; said body is movably mounted in a receptacle formed in the sun visor of the automobile; said receptacle is provided with two parallel tracks disposed on mutually opposite sides, along which said pivot means of said body can be displaced.

In comparison with conventional vanity mirrors, only the larger size of the mirror frame according to the invention can be detected from the outside, although its operative mode is totally differenct from that of hitherto known mirrors. In fact, the mirror of the invention has two positions which can be taken by rotating the body. These two positions are, respectively, an operating position and a concealed or withdrawn position. In the concealed position of the mirror only the rear of the mirror body is visible. In other words, in this concealed position the mirror is surrounded on all sides by material mechanically resistant to knocks, thus providing optimum protection. On the other hand in the operating position the body has been rotated and therefore the mirror mounted in said body is visible.

According to a preferred embodiment of the mirror of the invention, the pivot means of the body consists of pinions; the two tracks are racks, along which said pinions can be displaced from one end to the other in both directions.

According to further features of the automobile vanity mirror of the invention, the body has a generally rectangular shape and is crossed by a free axis parallel to and adjacent one of its longer sides; said two pinions are mounted on said shaft such that the pinions are mutually connected and rotate together.

Also outstanding is the fact that the body is provided with a handle, shaped as a recess in the side opposite the side bearing said pivot means or pinions.

The use of pinions and racks replacing the conventional simple pins and tracks is an important advantage, especially if furthermore the two pinions engage each other. In fact, the connection between the pinions and the axis crossing the body ensures that the rotary movement of the mirror is effected without irregular deviations. i.e. the mirror is provided both with a relative movement of rotation around the axis and a movement of translation, in which said mirror moves in association with the axis and with always remains parallel to itself. Consequently, with this movement the pinions rotate synchroneously on the racks like a rack and pinion system, without leaving the guide ways in which they move.

Furthermore, this condition also ensures the stability of the assembly of the mirror in the sun visor frame. Thus the mirror cannot be separated accidentally from the frame and fall.

It is also a feature of the automobile vanity mirror in question that the mounting member housed in the body comprises a thin flat edge adapted to the inner profile of said body; in said edge are formed appropriate engagement means for said body and for the covering frame as well as a wide transverse band parallel to the plane of the mirror.

This mounting member consisting of lightweight plastics material acts as an essential element in the connection between the body and the covering frame. Furthermore, it supports other additional members described hereinafter.

According to a further feature, the mirror includes retaining means for locking the body into two positions, namely the operating position and the concealed position.

Furthermore the covering frame includes a profiled edge provided on the inner surface thereof with a flat closed slot, in which the mirror itself is housed, as well as small hooking feet distributed positionally and dimensionally in conformity with the engagement means of the lightweight mounting member.

Thus the mirror is held around the inner edge of the window of the covering frame, in which it is inserted; thereby its physical integrity is insured against possible vibration and shakes acting on the automobile sun visor. Furthermore, the covering frame can be mounted rapidly on the body in an extremely simple manner due to both the peculiar shape of the profile forming said covering frame and to the small legs, with which it is provided and which are inserted in the lightweight mounting member.

The present automobile vanity mirror is also characterized in that the receptacle housing the body is formed by an independent frame outside of said body, which is attached in a cavity provided for this purpose in the sun visor body.

According to this embodiment, the mirror, as initially described, is provided with a frame independent of the body of the sun visor; said frame may be attached in a cavity provided therein for housing the mirror. It is understood that in this embodiment the tracks, i.e. preferably the two racks facilitating the displacement of the pinions of the body, are located in two internal parallel edges of the frame. It is extremely simple to mount such a unit.

An important advantage derived from this particular embodiment resides in the possibility to equip different sun visor models, that is sun visors having different shapes and sizes, with one mirror model, thereby achieving considerable savings both in the materials used and in equipment, tooling and volume of stocks.

According to a further embodiment, the receptacle housing the body is formed by the sun visor body itself.

In this further embodiment, the sun visor body is provided with a cavity in which the mirror body is housed. Furthermore, said sun visor body is provided, on two internal parallel edges of said cavity, with the two tracks (which are preferably two racks) for the pinions of the free axis, thereby achieving a large reduction of the unit cost of the sun visor mirror ensemble for the manufacture of a mass-produced model with a high number of units.

In accordance with a further feature of the automobile vanity mirror according to the invention, illumination means are provided in the body, comprising to this end: elongated sheet-like members of conductive material positioned and fixed in retaining means disposed in the lightweight mounting member, electric conductors linking the terminals or contact edges of said sheet-like members with a source of electrical power and electric light sources (bulbs) disposed in con tact and retaining areas suitably provided in the elongated sheet-like members, with the circuit being closed by the retaining mechanism only in that position of the body in which the mirror is uncovered for use. The electrical circuit means can be completed by a reflector for the light produced, disposed in the bottom of the body, and two thin diffusors preferably of translucid plastics material, housed in corresponding windows of the covering frame, one on each side of the mirror handle.

Thus, the retaining mechanism acts as a switch for the electric circuit energizing the light source(s) housed inside the mirror body, thereby avoiding the drawback of having to arrange a special switch on the dash panel or in any other inappropriate place within the vehicle.

Furthermore, the reflector mounted on the bottom of the container body effectively aids in enhancing and diffusing very uniformly the light given off by said light sources, providing excellent comfort.

The sheets of drawings accompanying this description show as a non-limiting example one embodiment of the present invention. In the drawings:

Figure 1 is a front view of a portion of a sun visor containing the vanity mirror of the invention, showing schematically the general layout of some of the main components. In this example the vanity mirror is equipped with light sources.

Figure 2 is a cross section view of the vanity mirror on the line II-II of Figure 1.

Figure 3 is a plan view of the vanity mirror from above as seen in Figure 1.

Figure 4 is a cross section view of the vanity mirror on the line IV-IV of Figure 2, showing other characteristic details.

Figure 5 is a front view of an essential part of the vanity mirror.

Figure 6 is a view, on a larger scale, of the portion of the vanity mirror marked in a circle in Figure 4, in a characteristic embodiment, and

Figure 7 is a view similar to that of Figure 6 of the same vanity mirror portion marked with a circle in Figure 4, according to another characteristic embodiment.

As evident from the drawings, an automobile vanity mirror according to the present invention is formed fundamentally by a body 1 having the shape of a generally rectangular box housing in the bottom 2 thereof a mounting member 3 of strong lightweight plastics material, including a narrow band 4 attached internally to the edge 5 of the body 1 and a wide band 6 in the centre. The body 1 is provided with a recess 7 housing a handle 8 formed in the body 1 to facilitate a rotatory movement. At the side opposite to the recess 7, the edge 5 is crossed by an axis 9 provided at each end thereof with respective pi ions 10a-10b. Said pinions 10a-10b serve as pivot means, allowing a precise rotatory movement; they mesh with the teeth of two corresponding racks 11a-11b located at each side of the receptacle R housing the body 1.

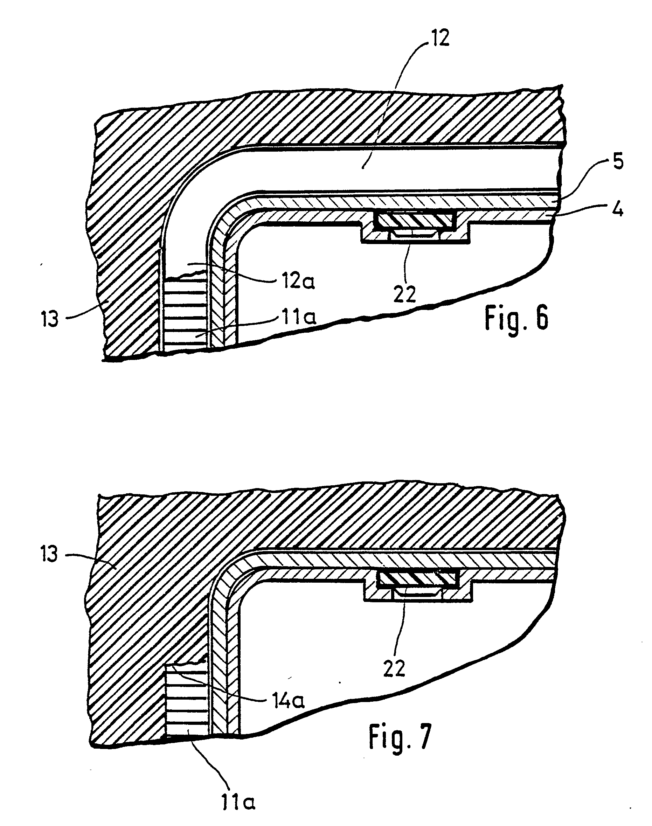

The receptacle R may be formed by an independent frame 12, as illustrated in Figure 6. In this case, said racks 11a-11b will be located in the hollow inner edges 12a-12b of said frame 12.

According to a further embodiment, the receptacle R may be formed in the body 13 of the sun visor, as illustrated in Figure 7. In this case, the two racks 11a-11b are located in respective cavities 14a-14b of said sun visor body 13. In both embodiments, however, the synchroneous movement of the two pinions 10a-10b is ensured, causing a translation movement of the axis, that is the axis remains always parallel to itself. This fact prevents it accidentally falling out of its housing.

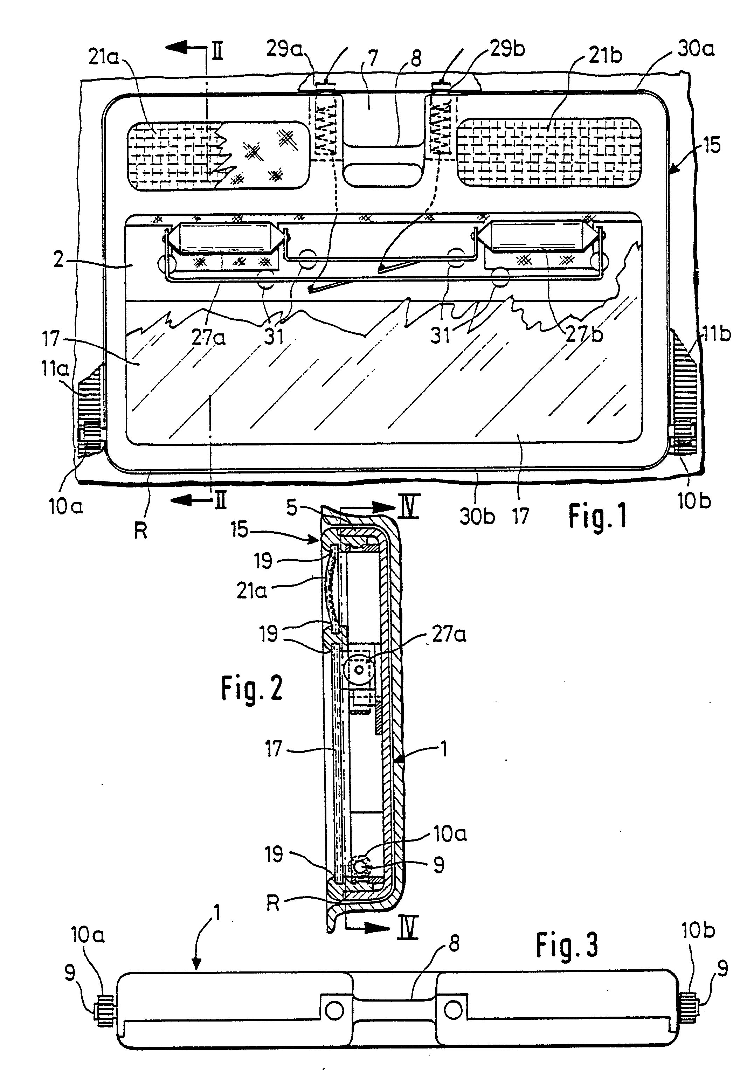

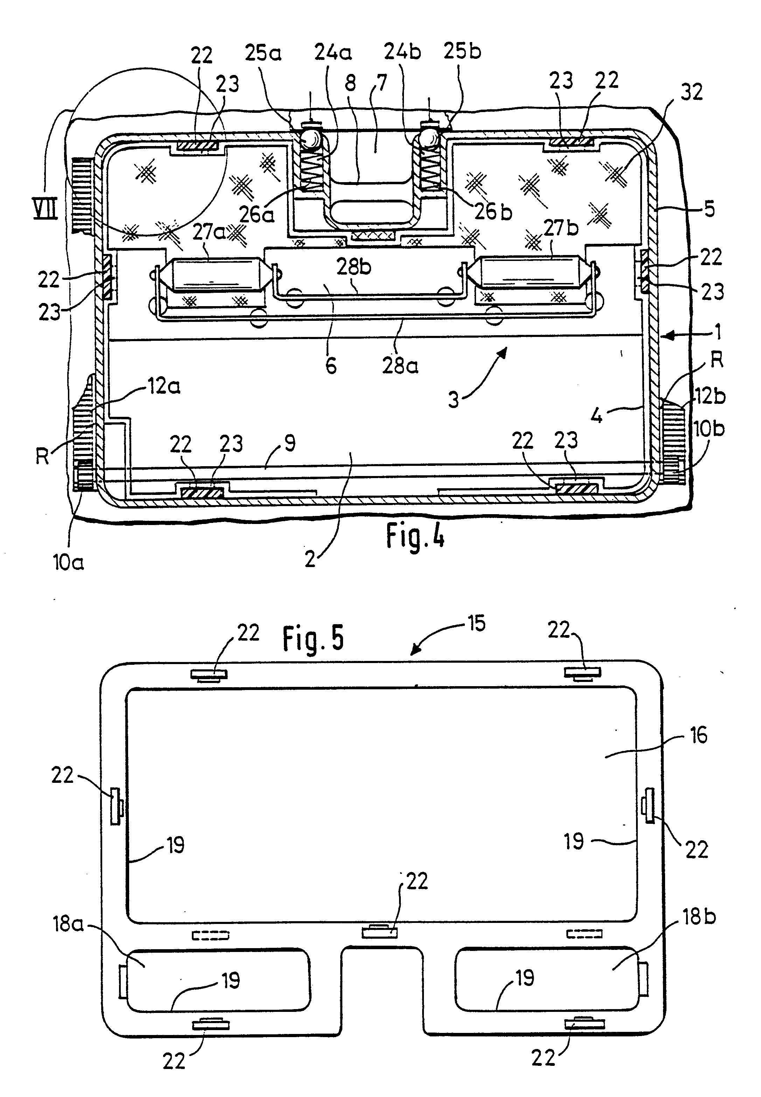

On the edge 5 of the body 1 there is disposed a covering frame 15 which in Figure 5 has been illustrated in the folded-down position with respect to the position of the body 1 shown in Figure 4. Three windows are defined in said covering frame 15; a window 16 in which the mirror 17 is located, and windows 18a-18b which are smaller and symmetrical relative to the mid-plane of the mirror. The inner edge of the frame 15, defining the windows 16-18a-18b, is provided with a groove 19 in which the mirror 17 and appropriate translucid plates 21a-21b, respectively, are inserted. Said groove 19 is seen clearly in Figure 2.

Small hooks 22 spaced apart on the inner surface of the frame 15 are inserted in hooking means 23 of the mounting member 3 disposed facing said hooks, facilitating correct attachement to the latter and therefore to the body 1. Figures 6 and 7 illustrate this engagement.

The mirror is held firm by the retaining mechanism after being moved from its concealed position to its operating position or vice versa. Figure 4 shows in detail one embodiment of said retaining mechanism: within cylindrical housings 24a-24b, formed in the body 1, there are mounted balls 25a-25b which are biassed by springs 26a-26b. The balls 25a-25b partially project from their housings and may engage corresponding orifices (not shown in the drawings) in two opposite edges of the cavity housing the body 1.

Figures 1 and 4 show the automobile vanity mirror according to the invention equipped with light sources illuminating the mirror. Bulbs 27a-27b are located between elongated conductive, metal, sheet-like members 28a-28b, which are electrically connected to the balls 25a-25b. On the other hand, the electric power from the terminals of the automobile battery reaches contact points 29a-29b by means of the anchorage of the sun visor body (not shown in the figures). In the operating position, the balls 25a-25b contact said points 29a-29b, the bulbs 27a-27b are energized and illuminate the mirror. In the concealed position, reached after rotating the mirror, the balls 25a-25b interrupt said electrical contact and the mirror illumination is switched off.

## Claims

1. A vanity mirror for automobiles, characterized by a body (1) in the form of a flat box provided, on opposite sides thereof, with two pivot means (10a-10b), furthermore by a lightweight mounting member (3) inserted in said body (1), a covering frame (15) attached to said mounting member (3), a mirror (17) mounted in said frame (15), and a retaining mechanism, said container body (1) being movably mounted in a receptacle (R) formed in a sun visor of said automobile, said receptacle (R) being provided with two parallel tracks (12a-12b) disposed on mutually opposite sides, along which said pivot means (10a-10b) of the body (1) is movable.

2. The vanity mirror of claim 1, characterized in that the pivot means (10a-10b) of the body (1) are pinions and that the two tracks (12a-12b) are racks, along which said pinions (10a-10b) are movable in both directions from one end to the other.

3. The vanity mirror of claim 2, characterized in that the generally rectangular body (1) is crossed by a free axis (9) extending parallel and adjacent to one of the longer sides, and that said axis (9) has mounted thereon said two pinions (10a-10b) such that these pinions (10a-10b) are mutually connected and rotate together.

4. The vanity mirror of any one of the foregoing claims, characterized in that the body (1) is provided with a handle (8) housed in a recess (7) in the side opposite the side bearing said pivot means or pinions (10a-10b).

5. The vanity mirror of any one of the foregoing claims, characterized in that the mounting member (3) housed in the body (1) comprises a thin flat edge (4) adapted to the inner profile of said body (1), that appropriate engagement means (23) for said body (1) and for the covering frame (15) are formed in said edge, and that a wide transverse band (6) extends parallel to the plane of the mirror.

6. The vanity mirror of any one of the foregoing claims, characterized by retaining means (24a-24b, 25a-25b, 26a-26b) for locking the body (1) into two positions, that is an operating position and a concealed position.

7. The vanity mirror of any one of the foregoing claims, characterized in that the covering frame (15) includes a profiled edge forming a flat closing slot (19) in which the mirror (17) itself is housed and small hooking feet (22) distributed positionally and dimensionally in conformity with the engagement means (23) of the lightweight mounting member (3).

8. The vanity mirror of any one of the foregoing claims, characterized in that the receptacle (R) housing the body (1) is formed by an independent frame (13) outside of said body (1), which is attached in a cavity provided in the sun visor body.

9. The vanity mirror of any one of claims 1 to 7, characterized in that the receptacle (R) housing the body (1) is formed by the sun visor body itself.

10. The vanity mirror of any one of the foregoing claims, characterized by illumination means provided in the body (1) and comprising elongated sheet-like members (28a-28b) of conductive material positioned and fixed in retaining means (31) provided in the lightweight mounting member (3), electric conductors linking the terminals or contact edges of said sheet-like members (28a-28b) with a source of electrical power and electric light sources (27a-27b) disposed in contact, and retaining areas suitably provided in the elongated sheet-like members (28a-28b), the circuit being closed by the retaining mechanism only when the body (1) is in the position in which the mirror is uncovered for use.

11. The vanity mirror according to claim 10, characterized by a reflector means (32) for the light produced, disposed in the bottom (2) of the body (1), and by two thin diffusor means (21a-21b) composed preferably of translucid plastic material and housed in corresponding windows (18a-18b) of the covering frame (15), one on each side of the mirror handle (8).

Fig.1

Fig. 2

Fig. 3

Fig.4

Fig.5

Fig. 6

Fig. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 652 982 (FLOWERDAY)<br>* column 3, line 20 - column 4, line 49 * | 1-3 | B 60 J 3/00 |
| Y | | 4-7,10 | |
| Y | DE-C-3 518 751 (HAPPICH)<br>* column 4, lines 56-58; column 4, lines 19-34 * | 4,6 | |
| Y | EP-A-0 196 961 (CIM)<br>* figure 2; column 2, lines 21-54 * | 7 | |
| Y | EP-A-0 261 989 (PRINCE CORPORATION)<br>* figure 3, column 5, lines 3-37; claim 12 * | 5 | |
| Y | US-A-4 227 242 (MARCUS)<br>* column 3, lines 3-41 * | 10 | |
| A | | 8,9,11 | |
| A | DE-A-3 404 735 (HAPPICH)<br>* figure 5, page 7, lines 6-9; page 7, lines 20-30 * | 4,10,11 | TECHNICAL FIELDS SEARCHED (Int. Cl.4) |
| A | US-A-4 486 819 (MARCUS et al.)<br>* column 4, lines 32,45; column 4, line 61 - column 5, line 10 * | 10,11 | B 60 J 3/00 |
| A | DE-U-7 721 483 (HAPPICH)<br>* claim 15 * | 10 | |

The present search report has been drawn up for all claims

| Place of search | Date of completion of the search | Examiner |
|---|---|---|
| BERLIN | 28-06-1989 | STANDRING M A |